# EUROPEAN PATENT SPECIFICATION

(11) **EP 1 194 317 B1**
(45) Date of publication and mention of the grant of the patent: **08.10.2003**
(21) Application number: 00935740.1
(22) Date of filing: 14.06.2000
(51) Int. Cl.: B60R 19/02, B60J 5/04, B62D 21/15, B62D 25/00

(54) **IMPACT BEAM AND METHOD OF MANUFACTURING THE SAME**
AUFPRALLTRÄGER UND VERFAHREN ZU DESSEN HERSTELLUNG
BARRE DE RENFORT ET PROCEDE DE FABRICATION ASSOCIE

(30) Priority: 18.06.1999 NO 993034
(43) Date of publication of application: 10.04.2002
(73) Proprietor: NORSK HYDRO ASA, 0240 Oslo (NO)
(72) Inventor: HOILAND, Thorbjorn, N-2830 Raufoss (NO); PEDERSEN, Roald, Helland, N-2818 Gjovik (NO); LUNDBERG, Anders, N-2816 Gjovik (NO)
(74) Representative: Patentanwälte Leinweber & Zimmermann
(86) International application number: NO0000205
(87) International publication number: WO00078575

(56) References cited:
- WO-A1-93/04897
- WO-A1-97/27082
- WO-A1-99/15365
- DE-A1- 4 228 878
- US-A- 5 580 120

## Description

The present invention relates to an elongated impact beam, and more particularly to a bumper beam for vehicles, and a method of manufacturing the same.

The bumper beam applied nowadays as a front or rear impact protection in automotive vehicles is generally curved or bent along its longitudinal extension for several reasons. This curved configuration is not only desirable for the aesthetic impression of private cars or provision of more space in the central area to accommodate e.g. the vehicle's radiator. First of all, this particular curved shape allows instant in deflection of the beam when exposed to an impact, e.g. collision, first during the elastic phase and later on the following plastic deformation depending on the magnitude of the impact (speed of the car) without damaging structural parts behind the beam.

This combined demand to the beam construction, coping with low speed impacts without permanent deformation (speed below 4 km/h) and simultaneously absorbing energy in a controlled manner at high speeds, is an engineering challenge.

Customarily the bumper beams are designed as closed chamber shapes provided internally/- externally with reinforcing means or multichamber shapes, where the internal webs/partition walls represent the reinforcement.

However, such known solutions, apart from increasing the weight of the beam, require additional manufacturing activities and thus increase substantially the manufacturing costs.

An impact beam according to the precharacterizing clause of claim 1 is known from the WO-A1-9304897.

US-A-5, 580, 120 discloses a vehicle door intrusion beam according the preamble of claim 1, with grooves disposed towards the interior and exterior of the vehicle, meant for enforcing the beam by enhancing the impulsive moment of the beam resulting in an improved impact absorption.

It is an objective of the present invention to provide a novel impact beam exhibiting increased buckling resistance and lateral stability of the beam and thus thereby to increase the energy absorption performance of the beam.

A further objective is to improve/maximize the elastic energy absorption of the beam.

Still another objective of the invention is to provide a one piece impact beam having integrated attachment means exhibiting minimal material consumption, thereby resulting in considerable cost and weight savings.

These and other objectives and advantageous special features according to the present invention are met by providing a novel method of manufacturing an impact beam and the resulting beam as defined in the accompanying patent claims 1 and 7, respectively.

The invention will now be described in details by the way of preferred embodiments referring to the attached drawings, Figs. 1-4, where
- Fig. 1: shows schematically in a perspective view a preferred embodiment of the impact beam according to the invention,
- Fig. 2: illustrates the different cross-sectional configuration along the longitudinal extension of the beam,
- Fig. 3: is a diagram impact force/displacement illustrating the difference between the energy absorption performance of the impact beam provided according to the present invention compared to a reference beam, and
- Fig. 4: shows another embodiment of an impact beam.

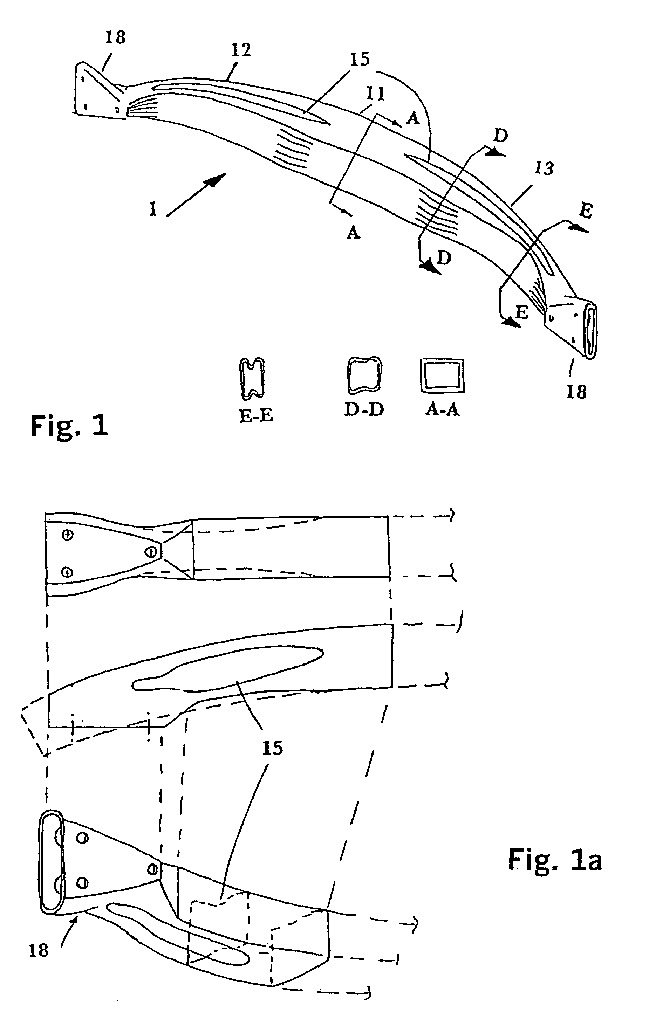

Referring to Figure 1 illustrating schematically in a perspective view the impact beam embodied as a bumper beam, the beam comprises one chamber configurated member 1 being preferably fabricated of a light weight material such as high strength Al-alloy starting from a straight hollow shape member being extruded in a conventional manner.

The beam exhibits a central part 11 of generally single closed chamber configuration illustrated in a cross-sectional view taken along lines A-A in the Figure as rectangular (other basic shapes than the shown rectangular one, e.g. oval, could also be applied).

After the bending operation the two lateral parts of the beam 12,13 are exposed to a deformation (by any conventional working means) providing the interfacing top and bottom walls of the beam with inwardly extending indentations 15.

According to a preferred embodiment of the bumper beam the depth of the indentations varies along such provided locally inverted walls, in this case successively increasing towards the ends of the beam as illustrated in vertical cross-sectional views taken along lines D-D and E-E in the Figure, thereby providing a more flexible beam.

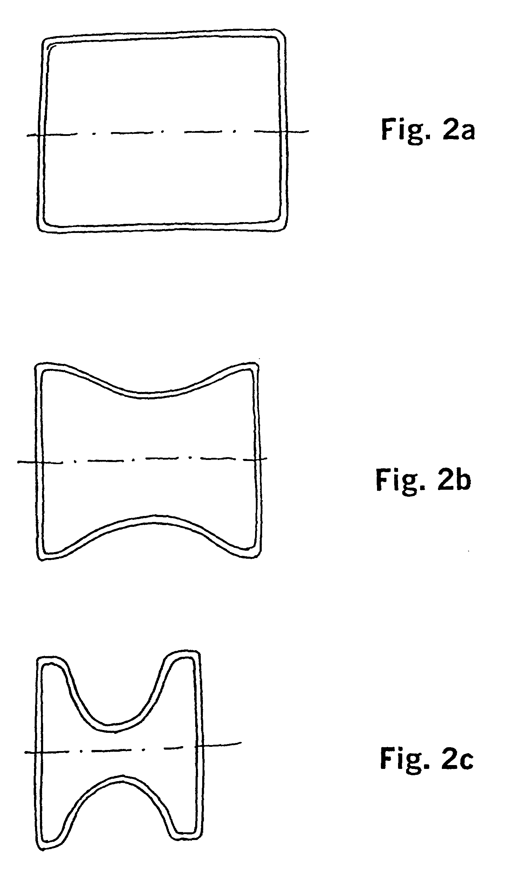

Figure 2 illustrates in enlarged schematical cross-sectional views the variations in the inwardly extending indentations 15 starting from the rectangular cross-section a) through the locally inverted (concave) configuration of the interfacing top/bottom walls b) into the deep indentations 15 in c).

Tests conducted on beams provided according to the present invention made of high strength Al-alloy from 7000 series show a remarkable lateral stability and substantial increase in the energy absorption exhibiting a different force/displacement curve compared to the reference beams.

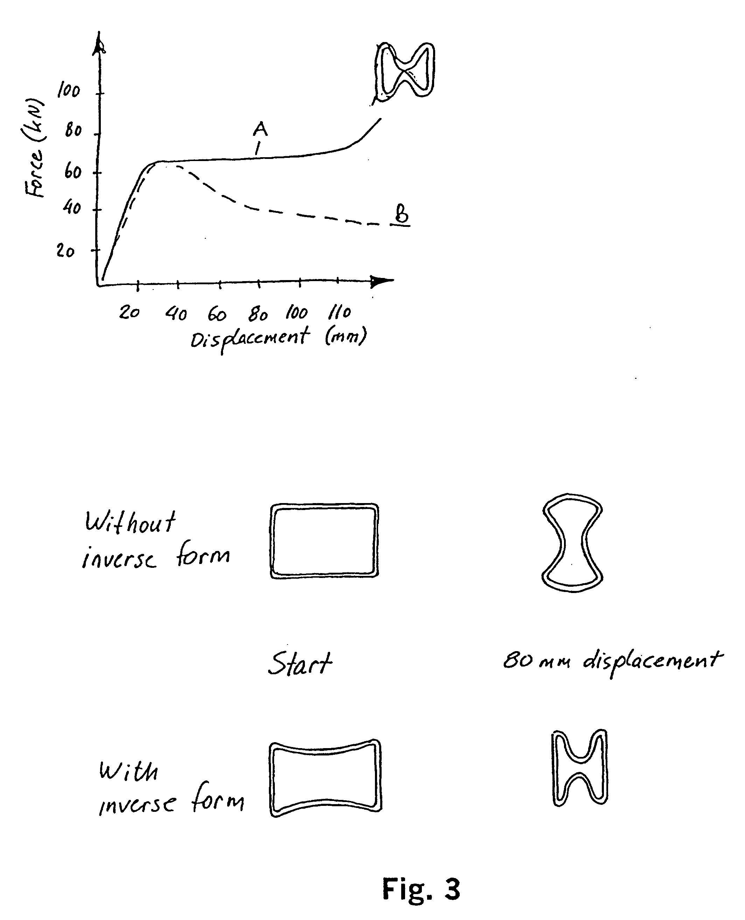

Figure 3 shows such diagram illustrating a fundamental difference between curves A (beams provided with inverse walls according to the present invention) and B (reference beams).

While curve B exhibits typical fall in force required for further displacement due to an uncontrolled deformation of the top/bottom walls of the beam (illustrated in the Figure by cross-sectional deformation after approx. 80 mm displacement) the curve A shows different behaviour keeping nearly constant force level during further displacement beyond 80 mm. The sudden increase of the force required for further plastic deformation is a result of a transformation from one chamber to a double chamber configuration of the cross-sectional configuration of the beam by abutting of the antagonistically inverted wall indentations as illustrated in the Figure.

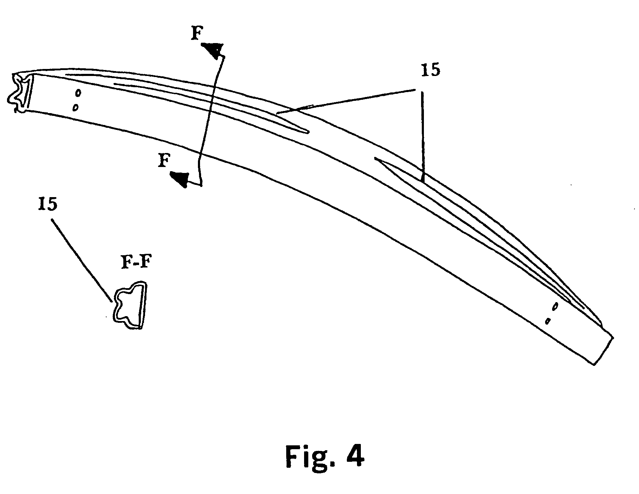

Figure 4 illustrates another embodiment of the bumper beam exhibiting where also the front wall of the beam is provided with an inwardly extending indentation 15 as shown in a cross-sectional view.

In both illustrated embodiments of the bumper beam the ends of the beams are advantageously reshaped three dimensionally to provide integrated attachment means 18 for a grid parallel attachment to e.g. the front/rear members of the vehicle frame construction. Fig. 1a illustrates schematically in details in a rear view, a top view and a perspective view, respectively, the freedom with regard to the material (flow) distribution thanks to provision of the indentations 18. A further advantage is a non-obstructed access to the one chamber cavity of the beam from the ends with forming tools, mandrils etc.

The present invention is not limited to the shown examples and bumper beams. An impact beam provided in accordance with the above described principles can be applied as impact protection incorporated e.g. as reinforcing door beam or reinforcement in a space frame construction of a vehicle body. The provision of inwardly protruding indentations over a predetermined part of the longitudinal extension of the beam can also cover the whole extension of the beam if appropriate.

## Claims

1. Impact beam, particularly for automotive vehicles, comprising a dose one chamber configurated member (1), **characterized by** exhibiting over a predetermined part(s) of its longitudinal extension inwardly protruding indentations (15) on at least top and bottom interfacing walls of the member,the indentations (15) ensuring controlled plastic deformation upon an impact resulting ultimately in a transformation of the one chamber cross-sectional configuration of the beam towards a double chambered configuration.

2. The impact beam according to claim 1,
**characterized in that**
the beam is a bumper beam comprising a central part (11) having a closed single chamber configuration and two lateral parts (12, 13) having the interfacing top and bottom walls of the inverted configuration.

3. The beam according to claim 2,
**characterized in that**
the lateral parts (12, 13) exhibit variation in the depth of the indentations along the locally inverted walls, thereby giving a more flexible beam.

4. The beam according to claim 3,
**characterized in that**
the depth of the indentation is successively increasing towards the ends of the beam.

5. The beam according to one or more preceding claims 2 to 4,
**characterized in that**
the bumper is one single piece beam integrating also grid parallel attachment means (18).

6. The beam according to one or more preceding claims,
**characterized in that**
the transformation of the one chamber cross-sectional configuration towards a double chambered configuration results from an abutment of the antagonistical indentations (15).

7. Method of manufacturing an impact beam for automotive vehicles comprising steps of
- providing a single close chamber member,
- bending of the the member involving three dimensional deformation into the desired configuration of the beam, and
- preforming of at least top and bottom interfacing walls of the member over a predetermined extension of the member providing inwardly protruding indentations, ensuring controlled plastic deformation upon an impact resulting ultimately in a transformation of the one chamber cross-sectional configuration of the beam towards a double chambered configuration.

## Patentansprüche

1. Aufprallträger, insbesondere für Kraftfahrzeuge, enthaltend ein Element (1) mit einer geschlossenen Konfiguration mit einer Kammer, **dadurch gekennzeichnet, dass** es über einen vorbestimmten Teil bzw. vorbestimmte Teile seiner Längenausdehnung nach innen vorragende Einbuchtungen (15) an mindestens der oberen und der unteren aufeinander zu weisenden Wand des Elements aufweist, welche Einbuchtungen (15) eine gesteuerte plastische Verformung bei einem Aufprall sicherstellen, die schließlich in einer Umwandlung der aus einer Kammer bestehenden Querschnittskonfiguration des Trägers zu einer zwei Kammern aufweisenden Konfiguration hin resultiert.

2. Aufprallträger nach Anspruch 1,
**dadurch gekennzeichnet, dass** der Träger einen Stoßstangenträger ist, der einen Mittelteil (11) mit einer Konfiguration mit einer geschlossenen einzelnen Kammer und zwei Seitenteile (12, 13) umfasst, welche die aufeinander zu weisende obere und untere Wand mit invertierter Konfiguration haben.

3. Träger nach Anspruch 2,
**dadurch gekennzeichnet, dass** die Seitenteile (12, 13) eine Variation der Tiefe der Einbuchtungen entlang der örtlich invertierten Wände zeigen, wodurch ein flexiblerer Träger erhalten wird.

4. Träger nach Anspruch 3,
**dadurch gekennzeichnet, dass** die Tiefe der Einbuchtungen zu den Enden des Trägers hin sukzessive zunimmt.

5. Träger nach einem oder mehreren der vorstehenden Ansprüche 2 bis 4,
**dadurch gekennzeichnet, dass** der Träger ein einstückiger Träger ist, in den auch Befestigungseinrichtungen (18) parallel zur Fahrzeugfront integriert sind.

6. Träger nach einem oder mehreren der vorstehenden Ansprüche,
**dadurch gekennzeichnet, dass** die Umwandlung der Querschnittskonfiguration mit einer Kammer zu der Konfiguration mit zwei Kammern hin aus dem Aneinanderstoßen der einander gegenüberliegenden Einbuchtungen (15) resultiert.

7. Verfahren zur Herstellung eines Aufprallträgers für Kraftfahrzeuge, enthaltend die Schritte
- Vorsehen eines Elements mit einer einzelnen geschlossenen Kammer,
- Biegen des Elements unter dreidimensionaler Verformung in die gewünschte Konfiguration des Trägers, und
- Vorformen mindestens der oberen und der unteren einander gegenüberliegenden Wand des Elements über eine vorbestimmte Ausdehnung des Elements, sodass sich nach innen vorragende Einbuchtungen ergeben, welche die plastische Verformung bei einem Aufprall sicherstellen, die schließlich zu der Umwandlung der Querschnittskonfiguration des Trägers mit einer Kammer hin zu einer Konfiguration mit zwei Kammern führt.

## Revendications

1. Poutre d'amortissement, en particulier pour les véhicules automobiles, comprenant un élément (1) configuré en une chambre fermé, **caractérisé en ce que** la poutre présente sur une/des partie(s) prédéterminée(s) de son extension longitudinale en saillie intérieurement des indentations (15) sur au moins des parois d'interfaçage supérieures et inférieures de l'élément, les indentations (15) assurant une déformation plastique contrôlée au moment d'un choc résultant en fin de compte en une transformation de la configuration transversale en une chambre de la poutre en une configuration en chambre double.

2. Poutre d'amortissement selon la revendication 1, **caractérisée en ce que** la poutre est une poutre de pare-chocs comprenant une partie centrale (11) présentant une configuration en une chambre fermée et deux parties latérales (12, 13) présentant les parois supérieures et inférieures d'interfaçage à configuration coudée.

3. Poutre selon la revendication 2, **caractérisée en ce que** les parties latérales (12, 13) présentent une variation dans la profondeur des indentations le long des parois coudées localement, donnant ainsi une poutre plus flexible.

4. Poutre selon la revendication 3, **caractérisée en ce que** la profondeur de l'indentation s'accroît successivement vers les extrémités de la poutre.

5. Poutre selon une ou plusieurs des revendications 2 à 4, **caractérisée en ce que** la poutre est une poutre d'une seule pièce intégrant également des moyens de fixation (18) à grille parallèles.

6. Poutre selon une ou plusieurs des revendications précédentes, **caractérisée en ce que** la transformation de la configuration transversale à une chambre en une configuration à chambre double résulte d'un aboutement des indentations antagonistes (15).

7. Procédé de fabrication d'une poutre d'amortissement pour véhicules automobiles comprenant les étapes consistant à :
- fournir un élément à une chambre fermée,
- couder l'élément, ce qui implique une déformation tridimensionnelle dans une configuration souhaitée de la poutre, et
- préformer au moins les parois d'interfaçage supérieures et inférieures de l'élément sur une extension prédéterminée de l'élément fournissant des indentations en saillie intérieurement, assurant une déformation plastique contrôlée au moment d'un choc résultant en fin de compte en une. transformation de la configuration transversale en une chambre de la poutre en une configuration en chambre double.
